# EUROPEAN PATENT SPECIFICATION

(11) **EP 2 524 994 B1**
(45) Date of publication and mention of the grant of the patent: **13.04.2016**
(21) Application number: 12168198.5
(22) Date of filing: 16.05.2012
(51) Int. Cl.: E01C 19/00, E01C 19/52, B65G 47/08

(54) **Method for the reformation of oblong paving stones**
Verfahren zur Herstellung eines Verbunds mit länglichen Pflastersteinen
Procédé de réformation des pavés allongés

(30) Priority: 16.05.2011 NL 2006785
(43) Date of publication of application: 21.11.2012
(73) Proprietor: Kalkman Holding B.V., 2921 LE Krimpen a/d Ijssel (NL)
(72) Inventor: van den Berg, Dick, 2957 NB Nieuw Lekkerland (NL); van der Schoor, Marcel Alexander Edwin, 2903 EE Capelle aan den IJssel (NL)
(74) Representative: Geurts, Franciscus Antonius

(56) References cited:
- WO-A1-83/03270
- NL-C- 1 035 850

## Description

### BACKGROUND OF THE INVENTION .

The invention relates to a method for the reformation of oblong paving bricks from a bond in rows as resulting from a production process into a final bond in the form of a herringbone bond at 45°, 90° or 135° in which the bricks can be placed ready-made as a layer in a sand bed.

In the production process the bond in rows is used as in that way the moulds or dies for the paving bricks van can be optimally used or because the moulding machine is restricted to said bond. A mould with which the said final bond is directly created produces fewer paving bricks using the same moulding machine, as a result of which the moulding machine cannot be utilised to its full potential. The reformation from a bond in rows into the final bond can be carried out by robots placing the paving bricks one by one in the correct position in the final bond.

WO83/03270 discloses a method for mechanically paving bricks from a bond of rows into a final bond in the form of a herringbone bond. In this method bricks are supplied in a number of rows. These rows are placed a small distance apart, while at the same time the bricks of adjoining rows are put in an off-set position relative to each other. Then all the bricks are turned, each of the successive rows being turned alternately in opposite direction. Finally the rows of bricks are moved towards each other, which leads to a herringbone pattern.

There is a need for methods that can be carried out using simpler machines.

### SUMMARY OF THE INVENTION

The invention provides a method for the reformation of a layer of paving bricks from a bond in rows into a final bond in the form of a herringbone bond at 45°, 90° or 135°, wherein the paving bricks have an oblong rectangular shape having two opposing head surfaces extending in the latitudinal direction and two opposing side surfaces extending in the longitudinal direction the length of which being substantially an integral multiple of the length of the head surfaces, wherein in the bond in rows the bricks are situated in at least three first rows extending parallel next to each other in which the paving bricks extend substantially transverse to the longitudinal direction of the row and within each row are situated side by side along substantially the entire side surfaces, wherein in the final bond the paving bricks are situated in second and third rows extending next to each other in which the paving bricks within each row itself are situated in the longitudinal direction at substantially 45 degrees to the longitudinal direction of the row and are situated side by side stepwise along only a part of the side surfaces, wherein in the third row the paving bricks are situated in their own longitudinal direction transverse to the own longitudinal direction of the paving bricks in the second row, wherein in a first step the paving bricks in the first rows extending parallel next to each other are reformed into a staggered bond in which considered in the longitudinal direction of the first rows, alternately in their own longitudinal direction over a saltation distance that substantially equals the length of the head surface in the same direction, paving bricks are placed partially out of their own first row, as a result of which the paving bricks with unaltered spatial orientation will end up in juxtaposed stepwise diagonal intermediate rows, in which the head surfaces are situated in a line at substantially 45 degrees to the longitudinal direction of the first rows, wherein in a second step of the juxtaposed intermediate rows every other intermediate row the paving bricks are all rotated a quarter of a turn in the same direction, wherein in a third step the intermediate rows are brought towards each other into the final bond in which the intermediate rows with the paving bricks that have been rotated a quarter of a turn form the second rows with the third rows on either side alongside them.

The method comprises the rotation or displacement of paving bricks in rows, which actions can be carried out with machines that are relatively easy to build or program.

In one embodiment between the second step and the third step the juxtaposed intermediate rows are placed spaced apart transverse to the longitudinal direction in order to generate rotation space for the quarter of a turn rotation.

In one embodiment the bricks have a length that is twice the width, wherein the saltation distance is half-brick.

In one embodiment of the paving bricks that are consecutive in the longitudinal direction and that are or have been placed partially out of their own row, the frontmost paving brick is or has been removed, as a result of which the consecutive paving bricks that are or have been placed partially out of their own row leave shorter chains than the paving bricks that are not or have not been moved. After rotating a quarter of a turn and forming the second and third rows a layer or group of paving bricks having a substantially rectangular outer contour can be created several of which can easily be stacked on a pallet.

In one embodiment the paving bricks in the final bond are situated in a group having a substantially rectangular outer contour.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
figures 1 shows a top view of an embodiment of the first section of a reformation device for reforming the paving bricks according to the invention;
figures 2A-2D show top views of a middle section of the reformation device, depicting consecutive method steps on the same group of paving bricks; and
figure 3 shows a top view of an end section of the reformation device.

### DETAILED DESCRIPTION OF THE DRAWINGS

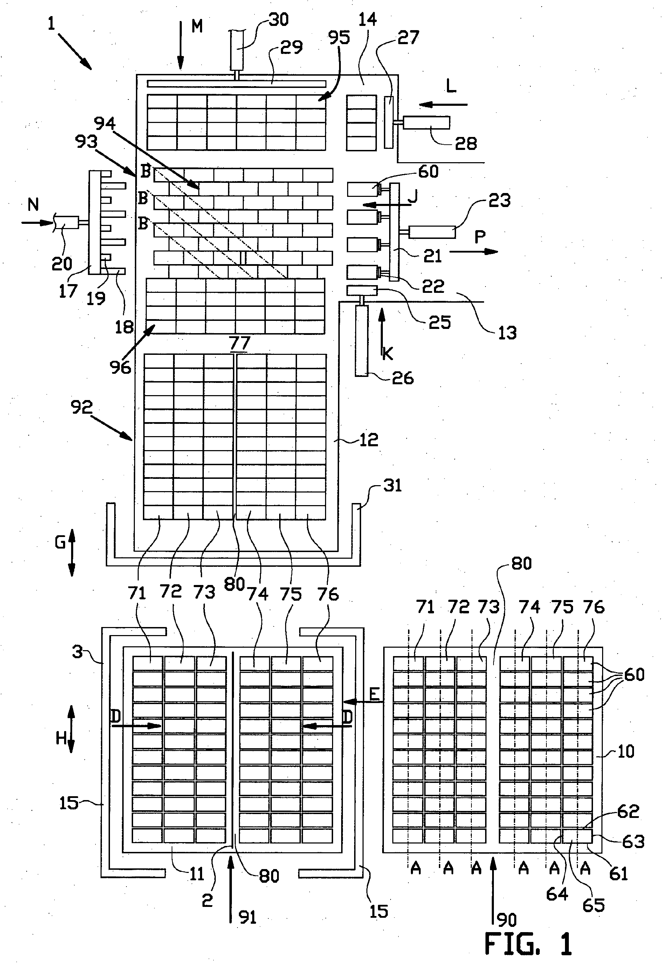

Figures 1, 2A-2D and 3 show an embodiment of a reformation device 1 according to the invention. The reformation device 1 is adapted for the reformation of rectangular oblong paving bricks 60 from a parallel formation in rows into a final formation in the form of a herringbone bond at 45°, 90° or 135°. The paving bricks 60 have two parallel side surfaces 61, 62, two shorter head surfaces 63, 64 that are oriented transverse thereto and a rectangular top surface 65. The length of the paving bricks 60 is an integral multiple of the width. Examples of such paving bricks 60 are standard or cobble sized clinkers having a length-width ratio of 2:1 for instance having a length of 21 cm and a width of 10.5 cm, paving bricks having a length-width ratio of 3:1, for instance having a length of 21 cm and a width of 7 cm, and paving bricks having a length-width ratio of 4:1, for instance having a length of 20 cm and a width of 5 cm. Such paving bricks are usually made of concrete.

Characterising for the final formations is that the paving bricks 60 are situated in stepped rows, wherein the paving bricks 60 between the rows one to the other regarding the longitudinal direction have been rotated a quarter of a turn and therefore per row are transverse to the paving bricks 60 in the immediately adjacent row. In herringbone bond at 90° the paving bricks 60 are situated in roadway direction and transverse thereto. In herringbone bond at 45° and 135° the paving bricks 60 are diagonal to the roadway direction in all rows, wherein the paving bricks 60 in the herringbone bond at 135° are more oblong than in the herringbone bond at 45°.

As shown in figure 1 the reformation device 1 has an elongated first slide track 12 and at the outer end thereof a second slide track 13 connecting transverse thereto which both extend horizontally. A first pusher 31 is positioned above the first slide track 12, which pusher by means of a hydraulic drive that is not shown is able to move rectilinearly and reciprocally in horizontal direction G over the first slide track 12. In front of the slide track 12 the reformation device 1 comprises a clamping transfer device 3 that is provided with a lifting frame that is not shown, below which frame a straight blade 2 and two clamps 15 are suspended, which clamps can be moved synchronously in direction D towards the blade 2 by means of a hydraulic drive. The lifting frame can be reciprocally moved in horizontal direction H and up and down in vertical direction with respect to the first slide track 12 by means of a hydraulic drive that is not shown either.

As shown in figure 1 on the side of the first slide track 12, in the extension of the second slide track 13, the reformation device 1 is provided with a first hydraulic drive cylinder 20 to which a transverse beam 17 with rams 18, 19 is attached. The rams 18, 19 stagger alternately over a distance that equals the horizontal width of the head surfaces 63, 64 of the paving bricks 60. The rams 18, 19 are positioned at a sufficiently low level with respect to the first slide track 12 in order to end up against the middle of the head surfaces 64. The rams 18, 19 can be moved in horizontal direction N from the starting position shown beyond the first slide track 12, over the first slide track 12 and the second slide track 13 to an end position amply beyond the second slide track 13.

As shown in figure 1, across the rams 18, 19, the reformation device 1 is provided with a second hydraulic drive cylinder 23 to which a transverse beam 21 with suctions cups 22 that can be activated are attached. The suction cups 22 are in the movement direction N of the rams 18, 19 straight across the far-reaching rams 18, and in horizontal direction J transverse to the first slide track are movable from the starting position shown beyond the first slide track 12 to an end position above the first slide track 12 and back again.

As shown in figure 1, along the first slide track 12 the reformation device 1 is provided with a third hydraulic drive cylinder 26 to which a second pusher 25 is attached. The second pusher 25 can be moved in horizontal direction K parallel to the first slide track 12 from the starting position shown beyond the second slide track 13, over the second slide track 13 towards a buffering section 14 beyond the first slide track 12 and the second slide track 13. In addition to the buffering section 14 the reformation device 1 is provided with a fourth hydraulic drive cylinder 28 to which a third pusher 27 is attached. The third pusher 27 can be moved in horizontal direction L from the starting position shown to an end position above the first slide track 12 and back again. In the extension of the first slide track 12 the reformation device 1 comprises a fifth hydraulic cylinder 30 to which a fourth pusher 29 is attached. The fourth pusher 29 can be moved in horizontal direction M parallel to the first slide track 12 from the starting position shown to an end position further down the first slide track 12 and back again.

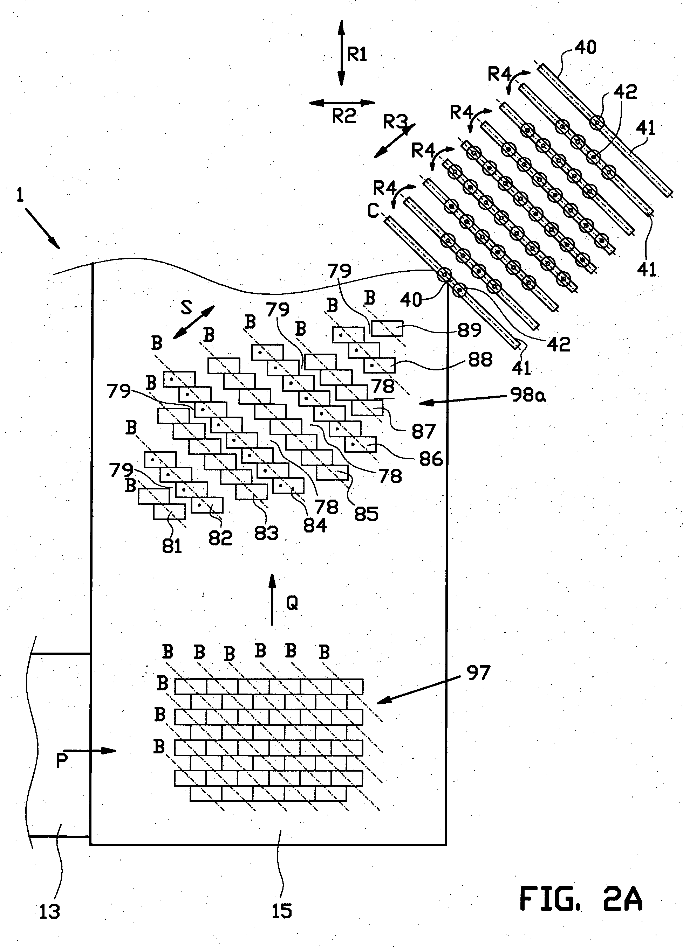

Figures 2A-2D show the same middle section of the reformation device 1. As shown the reformation device 1 comprises a conveyor 15 having a horizontal conveyance direction Q, which on a longitudinal side connects to the second slide track 13 in order to receive paving bricks 60 from it. There is a manipulator 40 above the conveyor 15. The manipulator 40 comprises a lifting frame that is not shown and suspended from a hydraulic drive that is not shown either for horizontal movement of the lifting frame in any combination of the horizontal orthogonal directions R1, R2 and for vertical movement of the lifting frame. Below the lifting frame supporting beams 40 extending parallel are suspended, with below them downwardly oriented, second suction cups 42 that can be activated. The rows of suction cups 42 are situated on lines C that are purely diagonal to the conveyance direction Q. By means of a hydraulic drive that is not shown the supporting beams 41 can be mutually moved apart and towards each other in direction R3. By means of a hydraulic drive that is not shown the suction cups 42 themselves can all be reciprocally rotated a quarter of a turn in direction R4 about the supporting beam 41 about a vertical central axis.

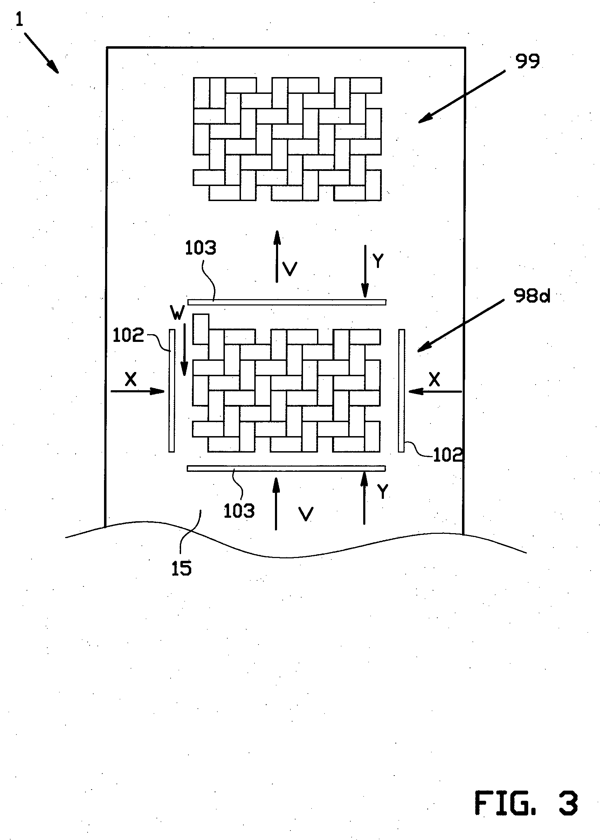

Figure 3 shows the end section of the reformation device 1, at which location it comprises two longitudinal consolidators 102 that are moveable towards each other in direction X and positioned above the conveyor 15 and two transverse consolidators 103 that are movable towards each other in direction Y and positioned above the conveyor 15, which consolidators are able to engage onto the outermost side surfaces 61, 62 and the head surfaces 63, 64 of the group of paving bricks.

The operation of the reformation device 1 and the reformation process carried out will be explained below on the basis of groups of paving bricks 90-98 that are passed consecutively, in batches through the reformation device 1.

Figure 1 shows a first support plate 10 and a second support plate 11 on which a first group of paving bricks 90 and a second group of paving bricks 91 are situated that are supplied from a production process. The first group 90 has left the production last. The groups of paving bricks 90, 91 comprise a singular layer of six rows of paving bricks 71-76 extending parallel to each other in row direction A. Within the rows 71-76 the paving bricks 60 are oriented transverse to the row direction A, wherein the side surfaces 61, 62 are situated alongside and across each other over substantially the entire length of the side surfaces 61, 62. Around the paving bricks 60 an intermediate space is present that is the result of or was required in the production process of the paving bricks 60. Over the middle a wider slit 80 is present as a result of the mould or die used in the production process.

As shown in figure 1 the first support plate 10 is conveyed in direction E towards the entry area. Its end position is shown for the second support plate 11. Subsequently the clamps 15 shift in direction D transverse to the row direction A towards the second group of paving bricks 91 as a result of which the paving bricks 60 are all dislodged from the second support plate 11 by shifting, to which support plate they were adhered because of the production. Due to the clamps shifting in direction D the head surfaces 63, 64 of the paving bricks 60 within the second group are placed against each other and in the middle they contact the blade 2. The paving bricks 60 are thus clamped in between the blade 2 and one of the clamps 15. Meanwhile the first pusher 31 has been moved in horizontal direction G towards the starting position shown.

Subsequently the transfer device 3 places the clamped paving bricks 60 on the first slide track 12. Then the first pusher 31 moves forward in horizontal direction G as a result of which within the second group of paving bricks 91 first all side surfaces 61, 62 facing each other are brought against each other. This is shown for the third group of paving bricks 92 on the first slide track 12. The third group of bricks 92 then sit in a waiting position for the further reformation process.

As shown in figure 1 the first pusher 31 shifts the third group of paving bricks 93 forward in direction G over the first slide track 12 until a paving brick 60 is situated in front of each ram 18, 19. The wider slit 80 can then be closed in several ways, for instance by the first pusher 31 itself or by passing the third group of paving bricks 93 in between two entry guides that are not shown. This is shown for the fourth group of paving bricks 93. The fourth group of paving bricks 93 as a result is notionally divided into a fifth group of bricks 94 that is situated straight in front of the rams 18, 19 and a sixth group of bricks 96 that remains behind it.

Subsequently the second hydraulic cylinders 23 brings the first suction cups 22 in direction J against the head surfaces 63 of the paving bricks 60 in the outermost row 76 and the suction cups 22 are activated. After that the second hydraulic cylinder 23 withdraws the first suction cups 22 as a result of which only the engaged paving bricks 60 will come to lie on the second slide track 13 as shown. This is done once per fifth group of paving bricks 94. The first suction cups 22 are deactivated so that the paving bricks 60 are released. The third hydraulic cylinder 26 pushes the second pusher 25 from the starting position shown forward in direction K as a result of which the pulled-out paving bricks 60 are placed on the buffering section 14 with their side surfaces 61, 62 against each other. After withdrawal of the second pusher 25 the fourth hydraulic cylinder 28 pushes the third pusher 27 from the starting position shown in direction L towards an end position in which the paving bricks 60 on the buffering section 14 are shifted back to the first slide track 12, into a position in the extension of the outermost row 76 on the first slide track 12. In that way a seventh group of paving bricks 95 is formed which, when it has the same number of rows as the sixth group of paving bricks 96, is combined with it into a new fifth group of paving bricks 94 straight in front of the rams 18, 19. The fifth hydraulic cylinder 30 for that purpose with the fourth pusher 29 pushes the seventh group of paving bricks 60 forward in direction M, and the first pusher 31 takes the sixth group 96 forward in direction H.

In this example the rams 18, 19 are on one side only and the suction cups 22 are on the opposite side of the fifth group of paving bricks 94. In an alternative embodiment the rams 18, 19 and the suction cups 22 are on either side and alternating from the one side or the other side the consecutive fifth groups of paving bricks are thrusted and removed, respectively, to mutually slightly compensate for the differences in height between the layers of paving bricks 60.

As shown in figure 1 the first hydraulic cylinder 20 pushes the rams 18, 19 in direction N over the first slide track 12. As a result the paving bricks 60 in the fifth group of paving bricks 94 first end up in a mutually staggered bond in which the saltation length substantially equals the width of the head surfaces 63, 64. The paving bricks 60 then notionally end up in parallel step-shaped diagonal rows having a diagonal row direction B over the centre of the equi-oriented head surfaces 64 that are at an angle of substantially 45 degrees to the row direction A of the original rows 71-76. In this example the notional diagonal rows have a stretcher bond because the length of the standard paving bricks 60 is twice as large as the width. Immediately following the realisation of the staggered bond the fifth group of paving bricks 94 is moved in its entirety in direction P over the second slide track 13, the staggered bond remaining unaltered, and finally ends up in a waiting position on the conveyor 15. In figures 2A-2D this is shown for the eighth group of paving bricks 97.

As shown in figures 2A-2D the conveyor 15 brings the eighth group of paving bricks 97 unaltered in direction Q within the reach of the manipulator 40. The rows of second suction cups 42 below the supporting beams 41 of the manipulator 40 extend according to a straight line C parallel to the notional diagonal row direction B. The manipulator 40 moves in direction R1, R2 and with the rows of suction cups 42 simultaneously picks up the paving bricks 60 within the corresponding notional diagonal rows and spreads them with unaltered orientation in direction R3. The result is shown in figure 2A for the ninth group of paving bricks 98a. This depiction is schematic as the manipulator 40 does not meanwhile release the paving bricks 60 as shown indeed in the figure for the sake of clarity only. The ninth group of paving bricks 98a thus consists of parallel diagonal step-shaped rows of paving bricks 81-89 which in direction S transverse to the notional diagonal row direction B have been placed apart so that intermediate spaces 78, 79 have been formed.

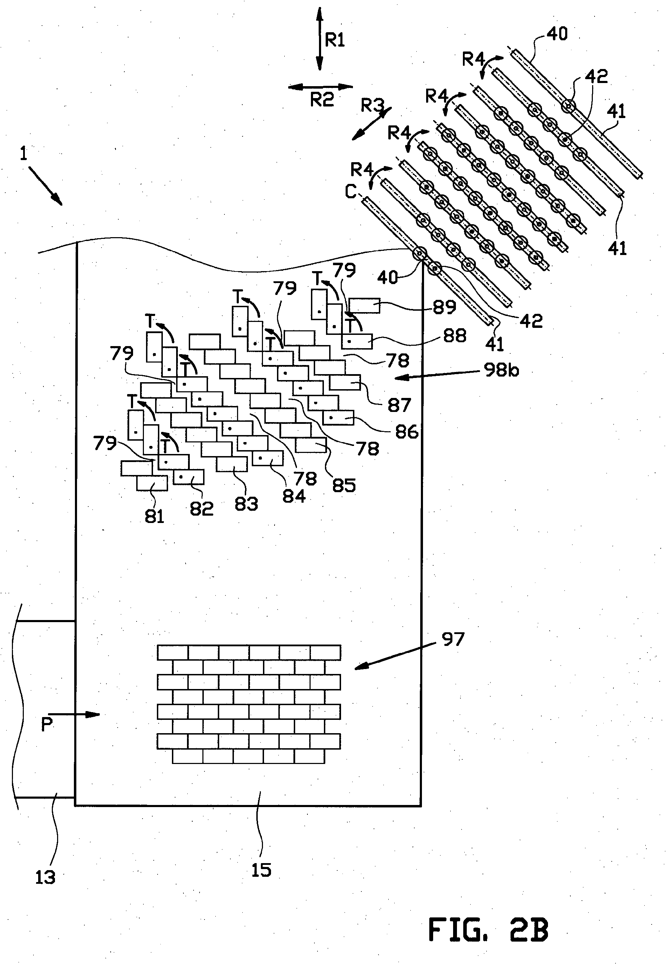

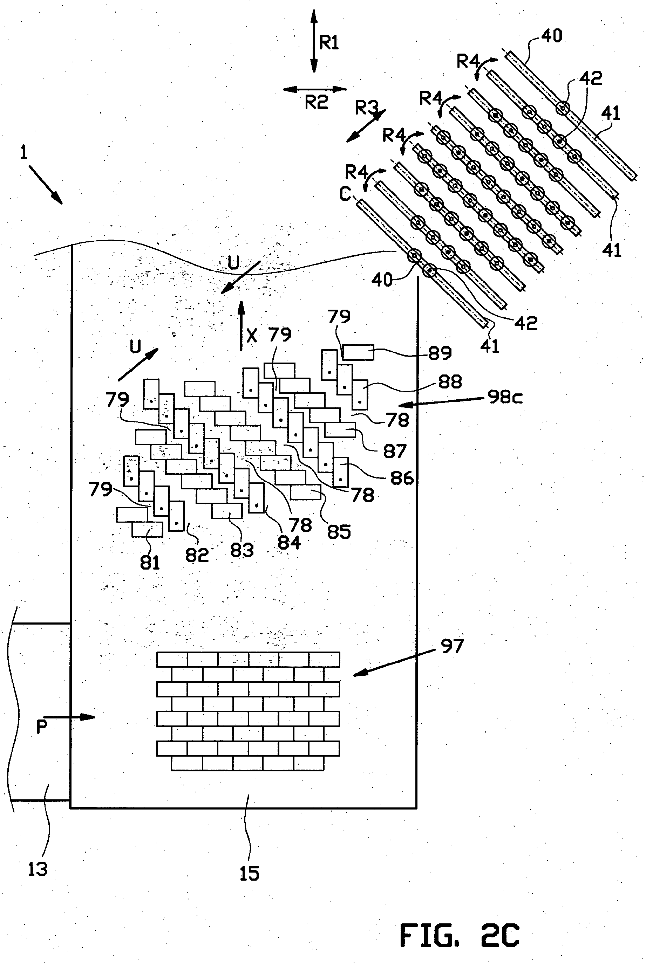

The centre of the suction cups 22 is at a notional point on the top surface 65 of the paving bricks 60 that is situated in the centre of a straight square that is formed by the head surface 64 and the section of the side surface 61 that is not situated along an adjacent side surface 62. Within the engaged diagonal row of paving bricks 82, 84, 86, 88 the suction cups 42 rotate the paving bricks 60 a quarter of a turn anti-clockwise one by one in the freely rotatable direction T. In figure 2B the intermediate result thereof is shown for the ninth group of paving bricks 98b. Alternatively the quarter of a turn rotations in direction T take place simultaneously within each of the diagonal rows of paving bricks 82, 84, 86, 88. In both cases the intermediate spaces 78, 79 offer sufficient room for manoeuvring between the diagonal rows of paving bricks 81-89. In figure 2C the final result thereof is shown for the ninth group of paving bricks 98c.

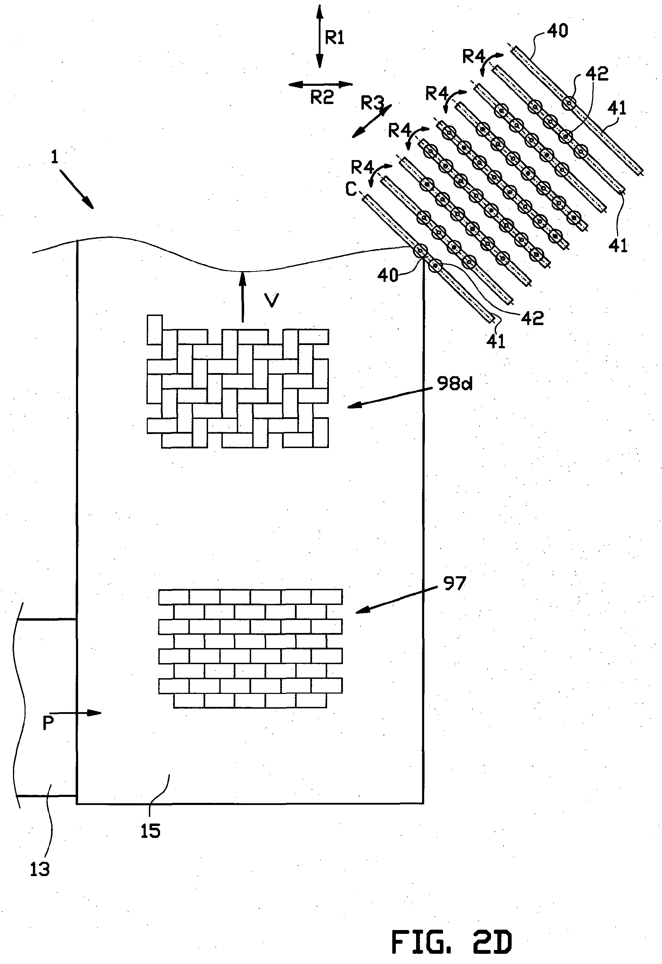

Subsequently the manipulator 40 brings the diagonal rows of paving bricks 81-89 in direction U against each other by moving the supporting beams 41 towards each other in direction R3, as a result of which the final formation is realised, in this example the herringbone bond at 90° or 45°. The engaged paving bricks 60 are placed back on the conveyor 15. This is shown in figure 2D for the ninth group of paving bricks 98d. In case of more oblong paving bricks 60 this would result in the herringbone bond at 135°. After this action a slight space around the paving bricks 60 can still be left over to counteract disruption of the process as a result of slight dimensional differences in the paving bricks 60.

As shown in figure 3 the ninth group of paving bricks 98b is conveyed onwards in direction V by the conveyor 15, until within the reach of the longitudinal consolidators 102 and the transverse consolidators 103. They subsequently move in directions X, Y towards each other, as a result of which the leading outermost protruding corner stone 60a is pushed back in direction W in order to provide the ninth group of paving bricks 98d with a rectangular outer contour as shown for the tenth group of paving bricks 99. Within it the paving bricks 60 are placed directly against each other. Several of these eighth groups of paving bricks 98 can be stacked onto a pallet for transportation to a work. The tenth groups of paving bricks 99 can be placed automatically as a layer in their entirety adjacent to each other on a sand bed in order to form a roadway with paving bricks in a herring bone bond at 45°, 90° or 135°.

In the embodiment described above the manipulator 40 does not engage onto the paving bricks 60 until they are on the conveyor 15. In an alternative embodiment the manipulator 40 picks up the paving bricks 60 directly from the fifth group of paving bricks 94 on the slide track 12 in order to transfer them to another location, for instance on the conveyor 15 or directly between longitudinal consolidators 102 and transverse consolidators 103. During transferring the spread of the rows and the rotations over a quarter of a turn can take place.

The above description is included to illustrate the operation of preferred embodiments of the invention.

## Claims

1. Method for the reformation of a layer of paving bricks (60) from a bond in rows into a final bond in the form of a herringbone bond at 45°, 90° or 135°, wherein the paving bricks (60) have an oblong rectangular shape having two opposing head surfaces (63, 64) extending in the latitudinal direction and two opposing side surfaces (61, 62) extending in the longitudinal direction the length of which being substantially an integral multiple of the length of the head surfaces (63, 64), wherein in the bond in rows the bricks (60) are situated in at least three first rows extending parallel next to each other in which the paving bricks (60) extend substantially transverse to the longitudinal direction of the row and within each row are situated side by side along substantially the entire side surfaces (61, 62), wherein in the final bond the paving bricks (60) are situated in second and third rows extending next to each other in which the paving bricks (60) within each row itself are situated in the longitudinal direction at substantially 45 degrees to the longitudinal direction of the row and are situated side by side stepwise along only a part of the side surfaces (61, 62), wherein in the third row the paving bricks (60) are situated in their own longitudinal direction transverse to the own longitudinal direction of the paving bricks (60) in the second row, **characterized in that** in a first step the paving bricks (60) in the first rows extending parallel next to each other are reformed into a staggered bond in which considered in the longitudinal direction of the first rows, alternately in their own longitudinal direction over a saltation distance that substantially equals the length of the head surface (63, 64) in the same direction, paving bricks (60) are placed partially out of their own first row, as a result of which the paving bricks (60) with unaltered spatial orientation will end up in juxtaposed stepwise diagonal intermediate rows, in which the head surfaces (63, 64) are situated in a line at substantially 45 degrees to the longitudinal direction of the first rows, wherein in a second step of the juxtaposed intermediate rows every other intermediate row the paving bricks (60) are all rotated a quarter of a turn in the same direction, wherein in a third step the intermediate rows are brought towards each other into the final bond in which the intermediate rows with the paving bricks (60) that have been rotated a quarter of a turn form the second rows with the third rows on either side alongside them.

2. Method according to claim 1, wherein between the second step and the third step the juxtaposed intermediate rows are placed apart transverse to the longitudinal direction in order to generate rotation space for the quarter of a turn rotation.

3. Method according to claim 1 or 2, wherein the bricks (60) have a length that is twice the width, wherein the saltation distance is half-brick.

4. Method according to any one of the preceding claims, wherein of the paving bricks (60) that are consecutive in the longitudinal direction and that are or have been placed partially out of their own row, the frontmost paving brick is or has been removed.

5. Method according to any one of the preceding claims, wherein the paving bricks (60) in the final bond are situated in a group having a substantially rectangular outer contour.

## Patentansprüche

1. Verfahren zur Umformung einer Lage Pflastersteine (60) von einem Reihenverband in einen Endverband in Form eines Fischgrätverbandes im 45 Grad-, 90 Grad- oder 135 Grad-Winkel, wobei die Pflastersteine (60) eine längliche rechteckige Form mit zwei sich in Breitenrichtung erstreckenden gegenüberliegenden Stirnflächen (63, 64) und zwei sich in Längsrichtung erstreckenden gegenüberliegenden Seitenflächen (61, 62) aufweisen, deren Länge im Wesentlichen ein ganzzahliges Vielfaches der Länge der Stirnflächen (63, 64) ist, wobei die Steine (60) in dem Reihenverband in mindestens drei sich parallel nebeneinander ersteckenden ersten Reihen angeordnet sind, in welchen sich die Pflastersteine (60) im Wesentlichen quer zur Längsrichtung der Reihe erstrecken und innerhalb der Reihen jeweils Seite an Seite entlang im Wesentlichen der gesamten Seitenflächen (61, 62) angeordnet sind, wobei die Pflastersteine (60) in dem Endverband in sich nebeneinander erstreckenden zweiten und dritten Reihen angeordnet sind, in welchen die Pflastersteine (60) innerhalb der Reihen jeweils selbst in Längsrichtung im Wesentlichen im 45 Grad-Winkel zur Längsrichtung der Reihe angeordnet sind und Seite an Seite in Stufen entlang lediglich eines Teils der Seitenflächen (61, 62) angeordnet sind, wobei die Pflastersteine (60) in der dritten Reihe in ihrer eigenen Längsrichtung quer zur eigenen Längsrichtung der Pflastersteine (60) in der zweiten Reihe angeordnet sind,
**dadurch gekennzeichnet, dass**
in einem ersten Schritt die Pflastersteine (60) in den sich parallel nebeneinander erstreckenden ersten Reihen in einen gegeneinander versetzten Verband umgeformt werden, in welchem, in Längsrichtung der ersten Reihen betrachtet, abwechselnd in ihrer eigenen Längsrichtung über eine Sprungdistanz, welche im Wesentlichen der Länge der Stirnfläche (63, 64) in derselben Richtung entspricht, Pflastersteine (60) teilweise aus ihrer eigenen ersten Reihe heraus versetzt werden, wodurch die Pflastersteine (60) mit unveränderter räumlicher Ausrichtung am Ende in dicht nebeneinander liegenden gestuften diagonalen Zwischenreihen zu liegen kommen, in welchen die Stirnflächen (63, 64) in einer Linie angeordnet sind, die im Wesentlichen einen 45 Grad-Winkel zur Längsrichtung der ersten Reihen bildet, wobei in einem zweiten Schritt von den dicht nebeneinander liegenden Zwischenreihen in jeder zweiten Zwischenreihe sämtliche Pflastersteine (60) um eine Vierteldrehung in dieselbe Richtung gedreht werden, wobei in einem dritten Schritt die Zwischenreihen aufeinander zu in den Endverband gebracht werden, in welchem die Zwischenreihen mit den um eine Vierteldrehung gedrehten Pflastersteinen (60) die zweiten Reihen bilden, mit den dritten Reihen jeweils längsseits auf beiden Seiten.

2. Verfahren nach Anspruch 1, wobei zwischen dem zweiten Schritt und dem dritten Schritt die dicht nebeneinander liegenden Zwischenreihen quer zur Längsrichtung auseinander gestellt werden, um Rotationsraum für die Vierteldrehung zu schaffen.

3. Verfahren nach Anspruch 1 oder 2, wobei die Steine (60) eine Länge aufweisen, die das Doppelte der Breite beträgt, wobei die Sprungdistanz die Hälfte eines Steins beträgt.

4. Verfahren nach einem der vorangehenden Ansprüche, wobei von den Pflastersteinen (60), die in Längsrichtung aufeinander folgen und die teilweise aus ihrer eigenen Reihe heraus versetzt werden oder wurden, der vorderste Pflasterstein entfernt wird oder wurde.

5. Verfahren nach einem der vorangehenden Ansprüche, wobei die Pflastersteine (60) in dem Endverband in einem Verbund angeordnet sind, der eine im Wesentlichen rechteckige Außenkontur aufweist.

## Revendications

1. Procédé de reformation d'une couche de briques de pavage (60) d'un appareil en rangées en un dernier appareil sous forme d'un appareil en chevrons à 45°, 90° ou 135°, dans lequel les briques de pavage (60) ont une forme rectangulaire oblongue ayant deux surfaces de tête opposées (63, 64) s'étendant dans la direction longitudinale et deux surfaces latérales opposées (61, 62) s'étendant dans la direction longitudinale dont la longueur est sensiblement un multiple entier de la longueur des surfaces de tête (63, 64), dans lequel dans l'appareil en rangées, les briques (60) sont situées dans au moins trois premières rangées s'étendant parallèles les unes aux autres dans lesquelles les briques de pavage (60) s'étendent sensiblement transversales à la direction longitudinale de la rangée et dans chaque rangée sont situées comme côte à côte sensiblement le long de la totalité des surfaces latérales (61, 62), dans lequel dans le dernier appareil, les briques de pavage (60) sont situées dans des deuxième et troisième rangées s'étendant l'une à côté de l'autre dans lesquelles les briques de pavage (60) dans chaque rangée elle-même sont situées dans la direction longitudinale à sensiblement 45 degrés de la direction longitudinale de la rangée et sont situées côte à côte par palier uniquement le long d'une partie des surfaces latérales (61, 62), dans lequel dans la troisième rangée, les briques de pavage (60) sont situées dans leur propre direction longitudinale, transversales à la propre direction longitudinale des briques de pavage (60) dans la deuxième rangée, **caractérisé en ce que**, dans une première étape, les briques de pavage (60) dans les premières rangées s'étendant parallèles les unes aux autres sont reformées en un appareil en quinconce dans lequel, considérées dans la direction longitudinale des premières rangées, en alternance dans leur propre direction longitudinale sur une distance de saltation qui est sensiblement égale à la longueur de la surface de tête (63, 64) dans la même direction, les briques de pavage (60) sont placées partiellement hors de leur propre première rangée, en conséquence de quoi les briques de pavage (60) avec une orientation spatiale non modifiée vont se retrouver en rangées intermédiaires diagonales juxtaposées par paliers, dans lesquelles les surfaces de tête (63, 64) sont situées dans une ligne à sensiblement 45 degrés de la direction longitudinale des premières rangées, dans lequel dans une deuxième étape des rangées intermédiaires juxtaposées, dans une rangée sur deux, les briques de pavage (60) sont toutes tournées d'un quart de tour dans la même direction, dans lequel dans une troisième étape les rangées intermédiaires sont rapprochées les unes des autres dans le dernier appareil dans lequel les rangées intermédiaires avec les briques de pavage (60) qui sont été tournées d'un quart de tour forment les deuxième rangées avec les troisième rangées de de chaque côté le long de celles-ci.

2. Procédé selon la revendication 1, dans lequel entre la deuxième étape et la troisième étape, les rangées intermédiaires juxtaposées sont placées à distance, transversales à la direction longitudinale afin de générer un espace de rotation pour la rotation d'un quart de tour.

3. Procédé selon la revendication 1 ou 2, dans lequel les briques (60) ont une longueur qui vaut deux fois la largeur, la distance de saltation étant une demi-brique.

4. Procédé selon l'une quelconque des revendications précédentes, dans lequel parmi les briques de pavage (60) qui sont consécutives dans la direction longitudinale et qui sont ou ont été placées partiellement hors de leur propre rangée, la brique de pavage la plus en avant est ou a été retirée.

5. Procédé selon l'une quelconque des revendications précédentes, dans lequel les briques de pavage (60) dans le dernier appareil sont situées dans un groupe ayant un contour externe sensiblement rectangulaire.
